(19) Europäisches Patentamt
European Patent Office
Office européen des brevets

(11) **EP 3 487 151 A1**

(12) **EUROPEAN PATENT APPLICATION**

(43) Date of publication:
**22.05.2019 Bulletin 2019/21**

(51) Int Cl.:
**H04L 29/08** (2006.01)   **G08B 13/196** (2006.01)
**H04N 5/225** (2006.01)

(21) Application number: **18205337.1**

(22) Date of filing: **09.11.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.11.2017   JP 2017220132
08.03.2018   JP 2018042304**

(71) Applicant: **CANON KABUSHIKI KAISHA
Ohta-ku
Tokyo 146-8501 (JP)**

(72) Inventor: **NUMATA, Masahito
Tokyo, 146-8501 (JP)**

(74) Representative: **TBK
Bavariaring 4-6
80336 München (DE)**

(54) **INFORMATION PROCESSING APPARATUS, MONITORING SYSTEM, METHOD, AND NON-TRANSITORY COMPUTER-READABLE STORAGE MEDIUM**

(57)     An information processing apparatus comprising, a calculation means configured to calculate, for each of persons who stay in a first area included in a processing target image obtained by capturing the first area, a stay duration in which the person stays in the first area, a specifying means configured to specify, among the staying persons, a first person whose stay duration exceeds a predetermined duration, and an output means configured to output a notification about the first person specified by the specifying means, wherein the calculation means calculates, as the stay duration, a first stay duration after each person exits, to the first area, from a second area different from the first area.

F I G. 1

**Description**

BACKGROUND OF THE INVENTION

Field of the Invention

The invention relates to an information processing apparatus, a monitoring system, a method, and a non-transitory computer-readable storage medium.

Description of the Related Art

To grasp the state of a user who visits a facility, there is proposed a system that uses image authentication (see Japanese Patent Laid-Open Nos. 2006-99486 and 2015-232791).

However, for example, there has been proposed no technique of monitoring persons by actually observing persons and visitors in a facility while ostensibly simulating business to obtain confidential information in a shared area such as a waiting area of a laboratory where arbitrary persons are allowed to stay.

SUMMARY OF THE INVENTION

The invention provides a technique for specifying a person who unnecessarily stays in a shared area for a long time and making a notification.

The invention in its first aspect provides an information processing apparatus as specified in claims 1 to 14.

The invention in its second aspect provides a monitoring system as specified in claim 15.

The invention in its third aspect provides a control method for an information processing apparatus as specified in claim 16.

The invention in its fourth aspect provides a non-transitory computer-readable storage medium as specified in claim 17.

Further features of the invention will become apparent from the following description of exemplary embodiments (with reference to the attached drawings).

BRIEF DESCRIPTION OF THE DRAWINGS

Fig. 1 is a block diagram showing an example of the arrangement of a monitoring system 10 according to an embodiment of the invention;

Fig. 2A is a view showing an example of a monitoring target zone to which the embodiment of the invention is applicable;

Fig. 2B is a block diagram showing an example of the hardware arrangement of an information processing apparatus 200 according to the embodiment of the invention;

Fig. 3A is a table showing an example of the data structure of a visitor database 310 in a database apparatus 300 according to the embodiment of the invention;

Fig. 3B is a table showing an example of the data structure of a time information database 320 in the database apparatus 300 according to the embodiment of the invention;

Fig. 3C is a table showing an example of the data structure of an image database 330 in the database apparatus 300 according to the embodiment of the invention;

Fig. 3D is a table showing an example of the data structure of a suspicious person database 340 in the database apparatus 300 according to the embodiment of the invention;

Fig. 4A is a flowchart illustrating an example of processing executed by a network camera 100 in the monitoring system 10 according to the embodiment of the invention;

Fig. 4B is a view showing an example of the data structure of a detected person information according to the embodiment of the invention;

Fig. 5 is a flowchart illustrating an example of processing executed by the information processing apparatus 200 in the monitoring system 10 according to the embodiment of the invention;

Fig. 6A and Fig. 6B are flowcharts illustrating an example of authentication processing executed by the information processing apparatus 200 in the monitoring system 10 according to the embodiment of the invention;

Fig. 7 is a flowchart illustrating an example of processing for displaying information indicating a suspicious person on an information display device 500, that is executed by the information processing apparatus 200 in the monitoring system 10 according to the embodiment of the invention;

Fig. 8A is a view showing an example of a screen displayed on the information display device 500 according to the embodiment of the invention; and

Fig. 8B is a view showing another example of the screen displayed on the information display device 500 according to the embodiment of the invention.

DESCRIPTION OF THE EMBODIMENTS

An embodiment of the invention will be described below with reference to the accompanying drawings. Note that arrangements to be described in the following embodiment are merely examples, and the invention is not limited to the illustrated arrangements.

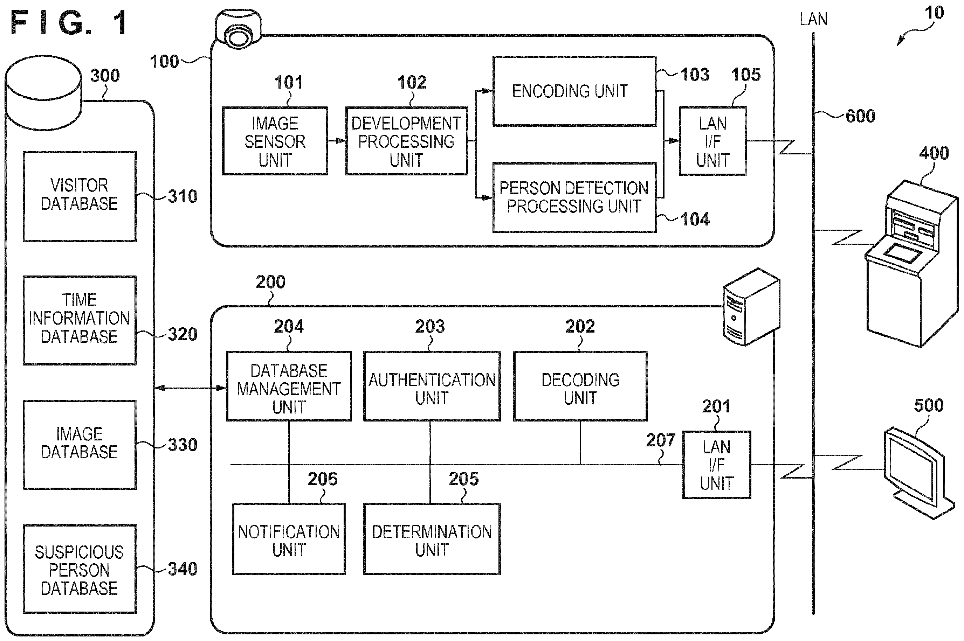

Fig. 1 is a block diagram showing an example of the arrangement of a monitoring system 10 according to the embodiment of the invention. The monitoring system 10 is formed by a network camera 100, an information processing apparatus 200, a database apparatus 300, a reception terminal 400, and an information display device 500, all of which are interconnected by a LAN 600 as a network line. The constituent elements of the monitoring system 10 shown in Fig. 1 are merely examples, and other constituent elements may be added. Each constituent element will be described below.

The network camera 100 can be configured to include an image sensor unit 101, a development processing unit 102, an encoding unit 103, a person detection processing unit 104, and a LAN interface (I/F) unit 105. The image sensor unit 101 includes an imaging element such as a CMOS element that photoelectrically converts an optical image formed on an imaging plane and outputs an analog image signal, and an A/D converter that converts an analog image signal into a digital image signal. The development processing unit 102 executes predetermined development processing for the digital image signal output from the image sensor unit 101. The development processing can include, for example, DeBayer processing, white balance processing, tone conversion processing, edge enhancement correction processing, flaw correction, noise removal, enlargement/reduction processing, and color conversion to the YCbCr format.

The encoding unit 103 compresses/encodes the digital image signal output from the development processing unit 102 to generate image data for distribution to be provided to the information processing apparatus 200. The generated image data includes the identification information (camera ID) of the network camera 100, information (position information) of an installation place, and shooting time information. The encoding unit 103 also sets a frame rate at the time of generation of image data. An image compression method for distribution can comply with a standard such as H.264, H.265, MPEG, or JPEG. Image data in an arbitrary format including the MP4 or AVI format may be generated.

The person detection processing unit 104 detects information about a person included in the digital image output from the development processing unit 102 by analyzing the digital image. Person information to be detected includes image data of, for example, the face, the upper body, the lower body, the whole body, the appearance from behind, or the like. The image data may be image data obtained by extracting, from a captured image, a region including a person. If a region is extracted, coordinate information in a captured image of the region is attached to the image data. The person information need not be the image data, and may be a feature amount obtained from the image based on predetermined calculation or may include both image data and a feature amount. If the person information includes image data, the image data undergoes the same compression/encoding processing as that executed by the encoding unit 103, and includes JPEG image data in the case of, for example, a still image. The detected person information and its coordinate information in the captured image are provided to the information processing apparatus 200 together with the camera ID of the network camera 100 that has shot the person, position information, shooting time information, and the like. The generated information will be referred to as "person detection information" hereinafter.

The person detection processing unit 104 may be included in an external apparatus, for example, the information processing apparatus 200, instead of being included in the network camera 100. In this case, the information processing apparatus 200 may execute some or all of the functions executed by the person detection processing unit 104, and the network camera 100 may execute the remaining functions.

The LAN I/F unit 105 serves as a communication interface for transmitting, to the information processing apparatus 200 via the LAN 600, the image data output from the encoding unit 103 or the person detection information generated by the person detection processing unit 104. The LAN I/F unit 105 adjusts data exchange with a communication partner using, for example, a network file system such as NFS or CIFS or a network communication protocol such as UDP or TCP.

Next, the arrangement of the information processing apparatus 200 will be described. The information processing apparatus 200 can be configured to include a LAN interface (I/F) unit 201, a decoding unit 202, an authentication unit 203, a database management unit 204, a determination unit 205, and a notification unit (output unit) 206, all of which are connected to each other by a system bus 207.

The LAN I/F unit 201 communicates with the network camera 100, the information display device 500, and the like via the LAN 600. The decoding unit 202 reconstructs a digital image signal by decompressing and decoding the image data included in the person detection information acquired from the network camera 100 via the LAN 600. The decoded digital image signal is output to the authentication unit 203. In an embodiment in which the information processing apparatus 200 includes the person detection processing unit 104, the person detection processing unit 104 can be provided to be connected to the system bus 207. The person detection processing unit 104 detects the information about the person from the image data decoded by the decoding unit 202, and provides the person detection information to the authentication unit 203.

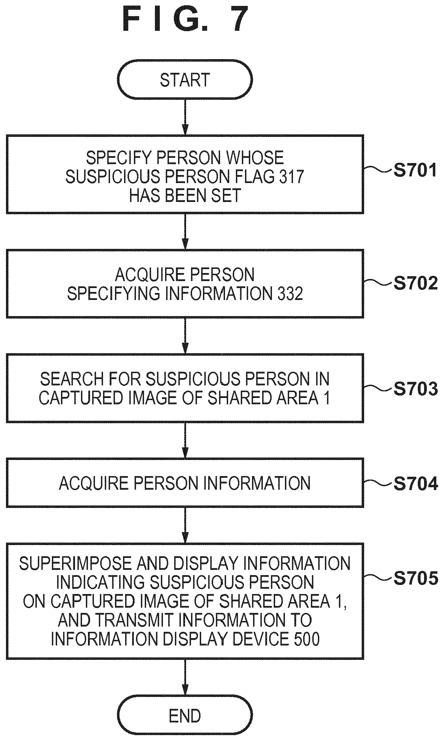

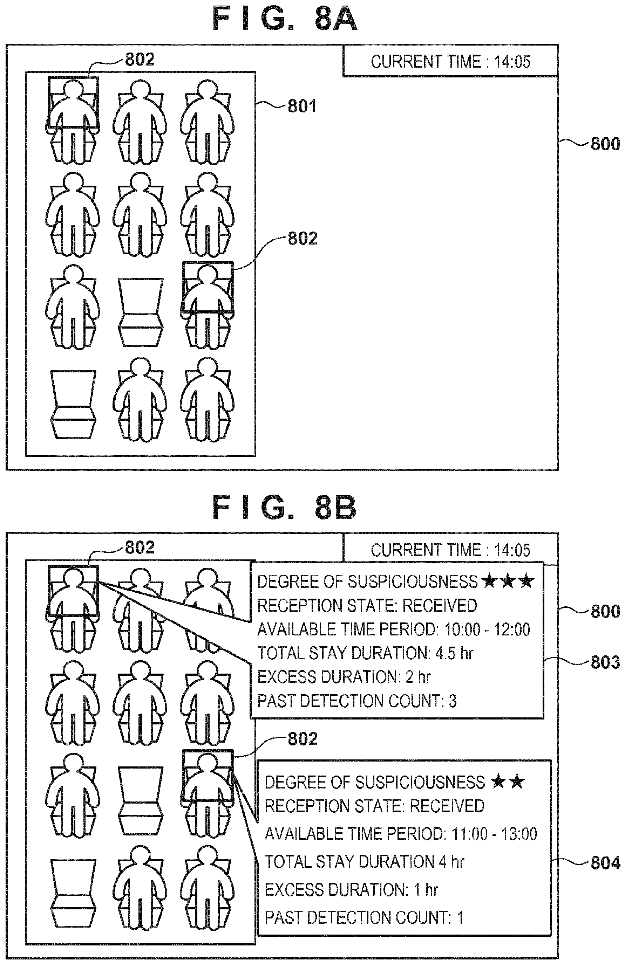

The authentication unit 203 performs authentication processing for specifying the captured person based on the person detection information generated by the person detection processing unit 104 and person specifying information (to be described later) registered in an image database 330 and a suspicious person database 340. The authentication processing will be described in detail later. The database management unit 204 manages registration information in each of databases 310 and 320 and the databases 330 and 340 of the database apparatus 300. For example, the database management unit 204 performs processing of updating the registration information in each database, extracting the registration information from each database, and providing the information to each processing unit, as needed. The determination unit 205 performs processing for specifying, based on the registration information in each database of the database apparatus 300, a suspicious person among persons staying in a shared area. The notification unit 206 notifies (outputs) the information display device 500 of information about the suspicious person based on a determination result in the authentication unit 203 and the determination unit 205. Details of the notification information will be described later with reference to Figs. 7, 8A, and 8B.

The database apparatus 300 is a database in which information to be referred to by the information processing apparatus 200 to execute processing according to this embodiment is registered, and can include the visitor database 310, the time information database 320, the image database 330, and the suspicious person database 340. Although the database apparatus 300 is connected to the information processing apparatus 200, the database apparatus 300 may include a network interface to be connected to the LAN 600. In this case, the information processing apparatus 200 and the database apparatus 300 communicate with each other via the LAN I/F unit 201.

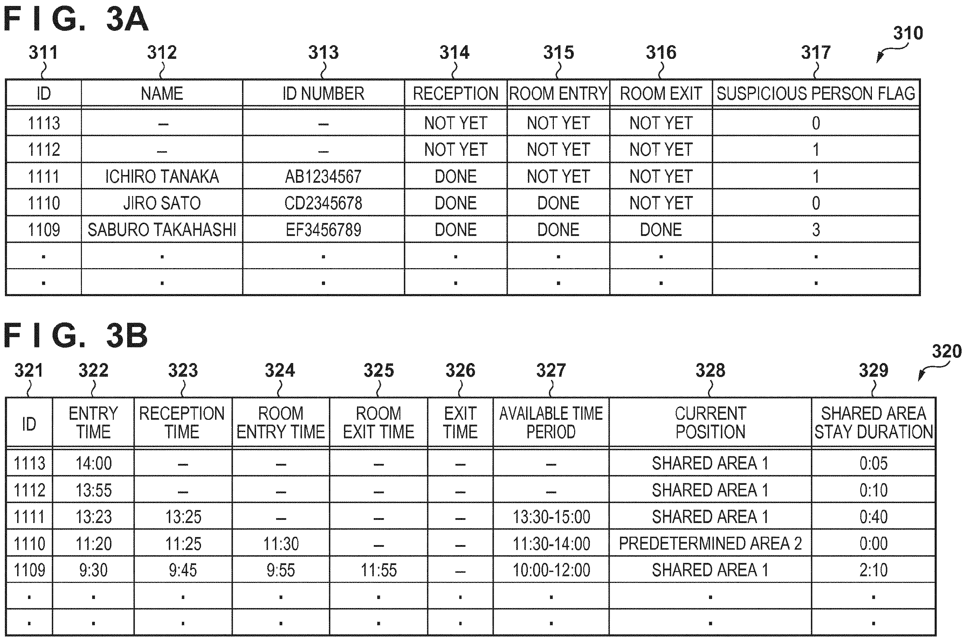

The visitor database 310 is a database in which information of a visitor staying in the monitor target zone of the monitoring system 10 is registered. The time information database 320 is a database in which time information of the time when a visitor is confirmed at a predetermined position in the monitor target zone or the like is registered. The image database 330 is a database in which an image captured by the network camera 100 arranged in the monitor target zone in the monitoring system 10 is registered in association with the visitor information registered in the visitor database 310. The suspicious person database 340 is a database in which information about a person who has been recognized as a suspicious person as a result of monitoring the behavior of the visitor in the monitoring system 10 is registered by including past information. Data structures of these databases will be described in detail later with reference to Figs. 3A to 3D.

The reception terminal 400 is a terminal apparatus used to receive a visitor who visits the monitoring target zone. A visitor can reserve a visit in advance, and can perform a reception procedure necessary to enter the zone by presenting predetermined information (a management number concerning social security or an ID card) for specifying himself/herself. Upon completion of the reception procedure, the reception terminal 400 specifies the person of the visitor who has been received, and transmits person information to the information processing apparatus 200 together with reception completion information. The person information can be transmitted to the information processing apparatus 200 by specifying the name and ID number (a number capable of identifying an individual, such as a management number concerning social security) of the person based on the ID card or the like.

The information display device 500 is a device that displays the information transmitted from the information processing apparatus 200, and can be implemented by, for example, a personal computer (PC), a tablet terminal, or a smartphone terminal. The information display device 500 may be connected to the LAN 600 via a wire or wirelessly. Wireless connection can comply with, for example, the standard of IEEE802.11 wireless LAN. The embodiment to be described below assumes, as the information display device 500, a personal computer serving as a display device used by a guard, who guards a facility where the monitoring system 10 is installed, to confirm a notification from the information processing apparatus 200.

In the arrangement of the monitoring system 10 shown in Fig. 1, the number of network cameras 100 can be an arbitrary number of one or more, and is not limited. Each of the information processing apparatus 200, the database apparatus 300, and the information display device 500 is implemented by a single apparatus but each function may be implemented by a plurality of apparatuses in cooperation with each other.

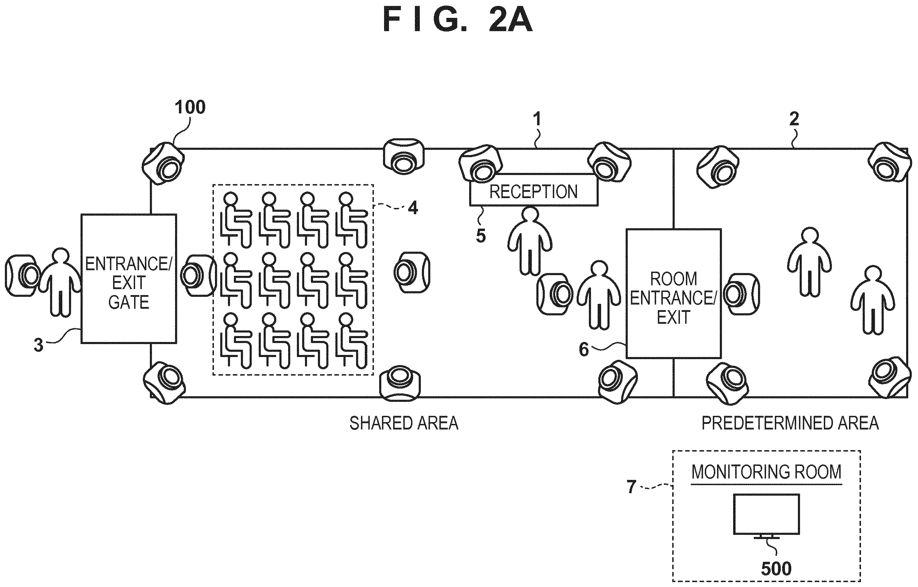

The monitoring system according to this embodiment can be applied to a monitoring target zone shown in Fig. 2A. The monitoring target zone is roughly partitioned into a shared area 1 and a predetermined area 2. The shared area 1 is an area where an arbitrary person can freely access without advance reservation or reception, and the predetermined area 2 is an area (a room or a passage connecting to the room) where a room entry (or "entry", the same applies to the following description) of only a visitor who has been received is permitted. Fig. 1 shows the predetermined area 2 as one area but the predetermined area 2 may be partitioned into a plurality of rooms.

A monitoring room 7 where an observer who monitors the shared area 1 and the predetermined area 2 resides is additionally provided. The installation place of the monitoring room 7 depends on an actual implementation form in accordance with the relationship with the shared area 1 or the predetermined area 2, and does not particularly influence the implementation of the invention.

A person needs to pass through an entrance/exit gate 3 to enter the monitoring target zone, and the network camera 100 is installed at the entrance/exit gate 3, and can capture an image of a person who passes through the entrance/exit gate 3 to specify the person based on the captured image. A waiting area 4 and a reception 5 are provided in the shared area 1, and a visitor can wait in the waiting area 4 for reception or a room entry. A plurality of network cameras 100 are installed in the shared area 1, thereby making it possible to monitor the behavior of a visitor. Each network camera 100 can capture a state of a visitor who stands by in the shared area 1 including the waiting area 4, and the information processing apparatus 200 can determine, based on the captured image, whether there is a visitor who unnecessarily stays for a long time. A visitor performs, at the reception 5, a reception procedure for entering the predetermined area 2. A state at this time is captured by each network camera 100, thereby making it possible to specify the person who has performed the reception procedure.

A visitor needs to pass through a room entrance/exit 6 to enter the predetermined area 2, and the monitoring target zone has a structure in which a visitor can enter the predetermined area 2 only from the shared area 1. A network camera 100 is installed at the room entrance/exit 6, and can capture a visitor who makes a room entry or room exit (or "exit", the same applies to the following description) to specify a person who makes a room entry or room exit. The room entrance/exit 6 may be provided with a side gate through which a visitor who has performed the procedure can pass. The use of the side gate makes it possible to reliably detect whether a room entry or room exit has been made while specifying accurate time. A similar side gate can be provided at the entrance/exit gate 3. The network camera 100 is installed in the predetermined area 2, thereby making it possible to monitor the behavior of a visitor in the predetermined area 2.

If a person who unnecessarily stays in the shared area 1 for a long time is detected, the observer is notified of the existence of the person using the information display device 500 in the monitoring room 7.

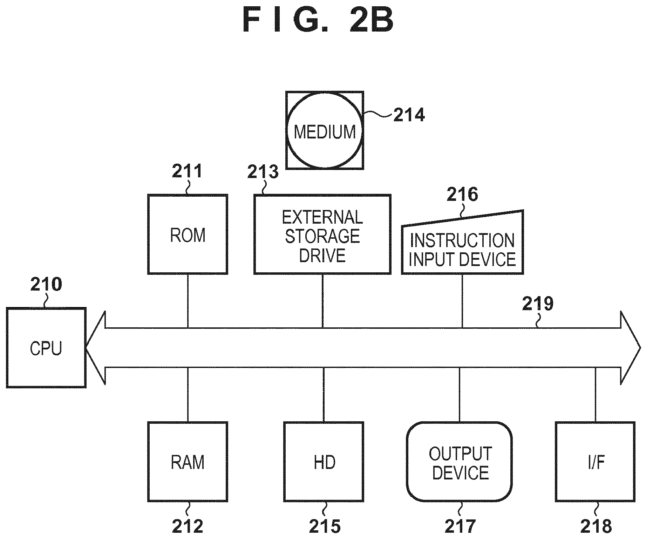

The schematic arrangement of the information processing apparatus 200 forming the monitoring system 10 according to this embodiment will be described next. Fig. 2B is a block diagram showing an example of the hardware arrangement of the information processing apparatus 200. The above-described database apparatus 300, reception terminal 400, and information display device 500 as information processing apparatuses may have the similar or same hardware arrangement.

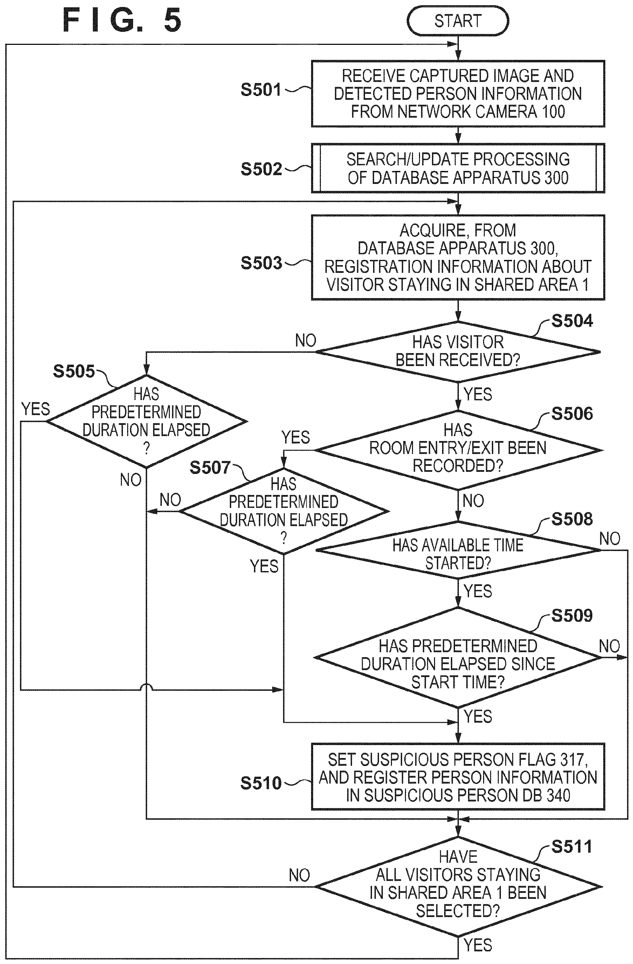

Referring to Fig. 2B, a CPU 210 performs control to execute an application program, an operating system (OS), a control program, or the like stored in a hard disk device (to be referred to as an HD hereinafter) 215 and temporarily store, in a RAM 212, information, files, and the like necessary to execute a program. The CPU 210 also executes processing according to this embodiment based on the detected person information provided from the network camera 100 and stored in the RAM 212 and the information acquired from the database apparatus 300. Furthermore, the CPU 210 controls data transmission/reception to/from the external information display device 500 via an interface (I/F) 218. Note that processes of Figs. 5 to 7 (to be described later) are implemented when the CPU 210 controls the overall apparatus by executing corresponding processing programs.

A ROM 211 stores various data such as an application program for executing predetermined processing in addition to a basic I/O program. The RAM 212 temporarily stores various data, and functions as a main memory, a work area, or the like for the CPU 210. The RAM 212 also temporarily stores the information received from the network camera 100 or the database apparatus 300.

An external storage drive 213 is an external storage drive for implementing access to a recording medium, and can load a program and the like stored in a medium (recording medium) 214 into this computer system. Note that as the medium 214, for example, a floppy® disk (FD), CD-ROM, CD-R, CD-RW, PC card, DVD, Blu-ray®, IC memory card, MO, memory stick, or the like can be used.

In this embodiment, as the external storage device 215, an HD (Hard Disk) functioning as a mass memory is used. The HD 215 stores application programs, an OS, control programs, and related programs, and the like. Note that instead of the hard disk, nonvolatile storage device such as a flash® memory may be used.

A keyboard and a pointing device (mouse or the like), a touch panel, or the like corresponds to an instruction input device 216. An output device 217 outputs a command input from the instruction input device 216, a response output of the information processing apparatus 200 to the command, or the like. The output device 217 can include a display, a loudspeaker, and a headphone terminal. A system bus 219 manages the flow of data in the information processing apparatus 200.

The interface (to be referred to as the I/F hereinafter) 218 has the role in mediating data exchange with an external apparatus. More specifically, the I/F 218 can include a wireless communication module, and the module can include well-known circuit mechanisms including an antenna system, an RF transmitter/receiver, one or more amplifiers, a tuner, one or more oscillators, a digital signal processor, a CODEC chipset, a subscriber identification module card, and a memory. Furthermore, the I/F 218 can include a wired communication module for wired connection. The wired communication module allows communication with another device via one or more external ports. The I/F 218 can include various software components that process data. The external port is coupled to another device directly via Ethernet, USB, IEEE1394, or the like or indirectly via a network. Note that software for implementing the same function as that of each of the above apparatuses can be used in place of the hardware apparatus.

Every time the corresponding program is operated to execute the processing according to this embodiment, the program may be loaded from the HD 215, in which the program has already been installed, into the RAM 212. Alternatively, the program according to this embodiment can be recorded in the ROM 211 to form part of a memory map, and then executed by the CPU 210 directly. Furthermore, the corresponding program and related data can be loaded from the medium 214 into the RAM 212 directly and executed.

The data structures of the respective databases in the database apparatus 300 will be described next with reference to Figs. 3A to 3D. Fig. 3A is a table showing an example of the data structure of the visitor database 310. In the visitor database 310, pieces of information of an ID 311, a name 312, an ID number 313, a reception 314, a room entry 315, a room exit 316, and a suspicious person flag 317 are registered as information about a visitor who visits the monitoring target zone of the monitoring system 10.

In the ID 311, identification information capable of uniquely specifying an individual visitor in the database is registered. If a visitor has been registered as a user of the facility, the name of the visitor is registered in the name 312. In the ID number 313, information of an ID number assigned to the registered visitor is registered. For example, for a person who has been registered as a user of the facility, a person name and an ID number are registered in association with a use history. A person can be specified based on an ID card presented at the reception. For a visitor who has been received, a name and an ID number are registered based on specified person information. Note that a database for managing person information (name, ID number, visit history, image, and the like) can be prepared separately.

In the reception 314, information indicating whether the visitor has performed the reception procedure at the reception 5 is registered. In the room entry 315, information indicating whether the visitor has entered the predetermined area 2 from the shared area 1 is registered. In the room exit 316, information indicating whether the visitor has exited the predetermined area 2 and returned to the shared area 1 is registered. In the suspicious person flag 317, information indicating whether the visitor corresponds to a suspicious person is registered. The flag information may be set to indicate the rank of the degree of suspiciousness of the visitor. For example, if ranking of degrees of suspiciousness is performed in three stages, when the flag information is 0, the visitor is not a suspicious person, and the degree of suspiciousness is higher as the number increases like 1, 2, and 3. The pieces of information shown in Fig. 3A are merely examples, and information other than those can be registered as information of the visitor.

Fig. 3B is a table showing an example of the data structure of the time information database 320. In the time information database 320, the time at which each visitor managed in the visitor database 310 performs a predetermined behavior is registered based on the capturing time of the network camera 100 installed in the monitoring target zone, or the like.

In the time information database 320, an ID 321, entry time 322, reception time 323, room entry time 324, room exit time 325, exit time 326, a available time period 327, a current position 328, and a shared area stay duration 329 are registered to manage information about the time of each visitor. In the ID 321, the identification information capable of uniquely specifying each visitor is registered. The same visitor is assigned with the same identification information as the ID 311 registered in the visitor database 310. In the entry time 322, the time at which the visitor enters from the entrance/exit gate 3 of the monitoring target zone is registered. The entry time can be determined based on the capturing time of an image captured at the time of the entry. Alternatively, if there exists an entrance gate, the entry time may be determined based on gate passage time. In the reception time 323, the time at which the visitor has performed the reception procedure at the reception 5 is registered. The reception time can be determined based on the capturing time of an image captured at the time of the reception or the time at which reception is performed. In this embodiment, the reception procedure may be a personal procedure performed by a receptionist or a procedure performed using the reception terminal 400 without personal intervention.

In the room entry time 324, the time at which the visitor moves from the shared area 1 to the predetermined area 2 and enters the predetermined area 2 is registered. The room entry time can be determined based on the capturing time of an image captured when the visitor passes through the room entrance/exit 6 or, if a gate is provided at the room entrance/exit 6 is provided, the time of passage through the gate. In the room exit time 325, the time at which the visitor moves from the predetermined area 2 to the shared area 1 and exits from the predetermined area 2 is registered. The room exit time can be determined based on the capturing time of the image captured when the visitor passes through the room entrance/exit 6 or, if the gate is provided at the room entrance/exit 6, the time of passage through the gate.

In the available time period 327, information of a time period in which the visitor is permitted to use (stay in) the predetermined area 2 is registered.

For example, if the visitor is permitted to enter the predetermined area for 1 hr from 14:00 to 15:00, information of a time period "14:00 - 15:00" is registered. The information of the available time period may be designated and registered at the time of reception of the visitor. In the current position 328, information of the current position of the visitor in the monitoring target zone is registered. The current position can be determined based on, for example, the position of the network camera 100 that has generated the latest captured image of the visitor. In the shared area stay duration 329, a stay duration in which the visitor stays in the shared area 1 is registered.

The pieces of information shown in Fig. 3B are merely examples, and information other than those can be registered as time information.

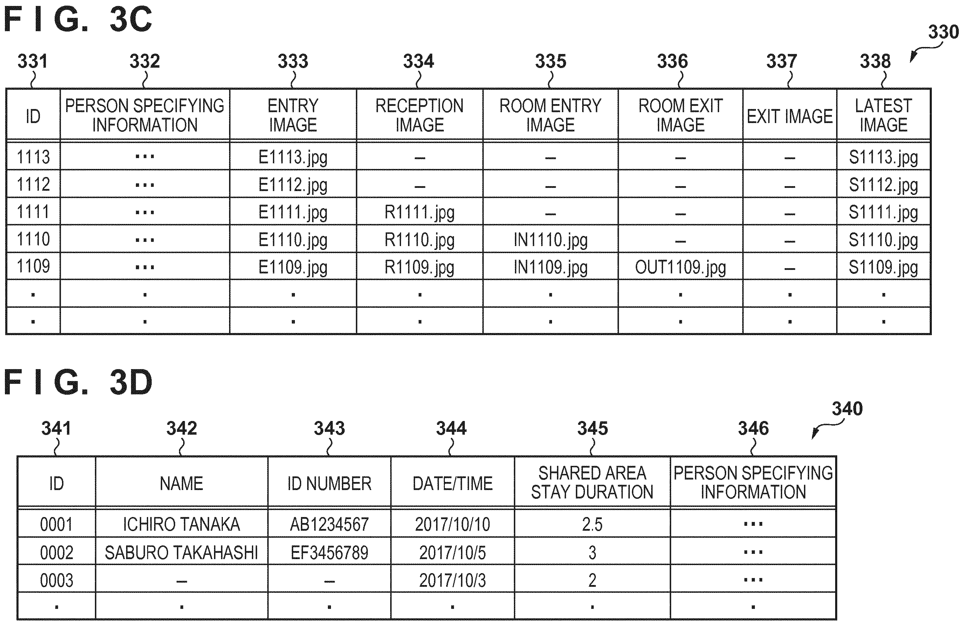

Fig. 3C is a table showing an example of the data structure of the image database 330. In the image database 330, an image of a visitor managed in the visitor database 310, that has been captured by the network camera 100 installed in the monitoring target zone, is registered. In the image database 330, an ID 331, person specifying information 332, an entry image 333, a reception image 334, a room entry image 335, a room exit image 336, an exit image 337, and a latest image 338 are registered.

In the ID 331, identification information capable of uniquely specifying each visitor is registered. The same visitor is assigned with the same identification information as the ID 311 registered in the visitor database 310. In the person specifying information 332, information available to specify a visitor is registered. For example, feature information (including a face image and a feature amount extracted from the face image) of the face of the visitor, that is available to specify the person in the captured image can be registered. The feature information may include image data of the face image that has been captured in the past in the monitoring system 10 and used for person specification. Furthermore, in this embodiment, in addition to the face, a feature obtained from the whole body may be used. For example, in addition to the face image, an image of the whole body, upper body, lower body, or the like, or a feature amount from the image can be included. Furthermore, individual information (birthday, address, age, sex, occupation, and the like) of the user other than the image data can be registered. Image recognition processing using the person specifying information makes it possible to perform person specification of an individual visitor in the image captured by the network camera 100 in the monitoring target zone.

In the entry image 333, an image captured when the visitor enters from the entrance/exit gate 3 of the monitoring target zone is registered. In the reception image 334, an image captured when the visitor is received is registered. In the room entry image 335, an image captured when the visitor passes through the room entrance/exit 6 to enter the predetermined area 2 is registered. In the room exit image 336, an image captured when the visitor passes through the room entrance/exit 6 to exit from the predetermined area 2 is registered. In the exit image 337, an image captured when the visitor exits from the entrance/exit gate 3 of the monitoring target zone is registered. In the latest image 338, a latest image obtained by capturing the visitor is registered.

Fig. 3D is a table showing an example of the data structure of the suspicious person database 340. In the suspicious person database 340, information of a visitor determined that he/she is performing a suspicious behavior in the monitoring target zone is registered. In the suspicious person database 340, an ID 341, a name 342, an ID number 343, date/time 344, a shared area stay duration 345, and person specifying information 346 are registered.

In the ID 341, identification information capable of uniquely specifying a visitor registered as a suspicious person is registered. Identification information different from the ID 311 registered in the visitor database 310 may be assigned. For example, if one person visits the monitoring target zone a plurality of times, and is determined as a suspicious person every time, the person is registered a plurality of times in accordance with respective determination results and, in this case, the same identification information is assigned.

If the suspicious person has registered the use of the monitoring target zone, the name of the person and the assigned ID number are registered in the name 342 and the ID number 343, respectively. If the suspicious person has performed no registration, the name 342 and the ID number 343 may be blank. In the date/time 344, in addition to the date when the person is determined as a suspicious person, time information such as information of a total stay duration, a stay time slot, and a available time slot of the day is registered. In the shared area stay duration 345, information of a time in which the person stays in the shared area when he/she is determined to be suspicious is registered. The time information can include information of the length of the stay duration and the stay time slot.

In the person specifying information 346, information available to specify the person is registered. As person specifying information, for example, feature information used to specify the person when he/she is determined to be suspicious can be registered, similarly to the person specifying information 332 registered in the image database 330. When the person visits the monitoring target zone next time, the person specifying information 346 can be used to determine, at the time of an entry, whether the person has been registered as a suspicious person. The pieces of information shown in Fig. 3D are merely examples, and other information can be registered as suspicious person information.

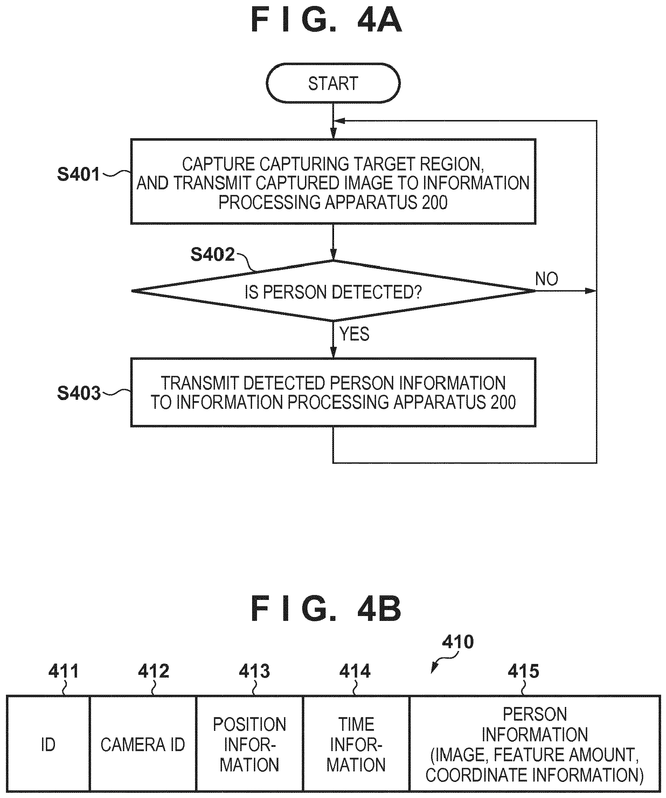

An operation in the monitoring system 10 according to this embodiment will be described in detail next. Fig. 4A is a flowchart illustrating an example of processing executed by the network camera 100 in the monitoring system 10 according to the embodiment of the invention.

In step S401, the network camera 100 causes the image sensor unit 101 to capture an image of a predetermined space or region as a capturing target at its installation position and output a digital image signal to the development processing unit 102. The development processing unit 102 performs predetermined development processing, and then outputs a digital image signal of a processing result to the encoding unit 103 and the person detection processing unit 104. The encoding unit 103 generates image data by compressing/encoding the input digital image signal, and transmits the image data to the information processing apparatus 200 via the LAN I/F unit 105.

In step S402, the person detection processing unit 104 performs person detection based on the digital image signal (to be simply referred to as a processing target image hereinafter) as a processing target. A case in which the person detection processing unit 104 performs person detection by detecting the face of a person will now be described. A known method can be used as a face detection method. If the face of a person can be detected, the process advances to step S403; otherwise, the process returns to step S401.

In step S403, the person detection processing unit 104 transmits information (detected person information) about the detected person to the reception terminal 400 via the LAN I/F unit 105. Fig. 4B shows an example of the data structure of the detected person information at this time.

Detected person information 410 includes an ID 411 as identification information for identifying the information, a camera ID 412 for identifying the network camera 100 which has detected the image, position information 413 of the network camera 100, and time information 414 indicating the capturing time of the image. In addition, the detected person information 410 includes person information 415 indicating the detected face image or a predetermined feature amount extracted from the face image. If the person information 415 includes the image data, the image data may be compressed/encoded as a still image in a format such as JPEG. Instead of the face image, information of coordinates at which the face of the person is located in the processing target digital image signal may be included in the detected person information 410. If a plurality of persons are detected in one captured image, the detected person information 410 may be generated for each person or one piece of information may be generated collectively for the plurality of persons. At this time, for each person, coordinate information for specifying the position of the person in the image is included.

After that, the process returns to step S401 to repeat the processes. With the above processing, the network camera 100 can transmit the image data of the capturing target region to the information processing apparatus 200, and transmit, if person detection processing is performed and a person is detected, the detected person information 410 about the person to the information processing apparatus 200 at the same time.

In an embodiment in which the person detection processing unit 104 is included in the information processing apparatus 200, the processes in steps S402 and S403 are executed not in the network camera 100 but in the information processing apparatus 200. More specifically, the person detection processing unit 104 executes person detection processing corresponding to step S402 for the image data decoded by the decoding unit 202, and provides, if a person is detected, detected person information to the authentication unit 203.

Processing executed by the information processing apparatus 200 based on the detected person information 410 received from the network camera 100 will be described next with reference to Fig. 5. Fig. 5 is a flowchart illustrating an example of processing executed by the information processing apparatus 200 in the monitoring system 10 according to the embodiment of the invention. Although a case in which person detection processing is executed in the network camera 100 will be described below, the person detection processing may be performed on the side of the information processing apparatus 200. In this case, the detected person information 410 is changed to information provided by the person detection processing unit 104 arranged in the information processing apparatus 200.

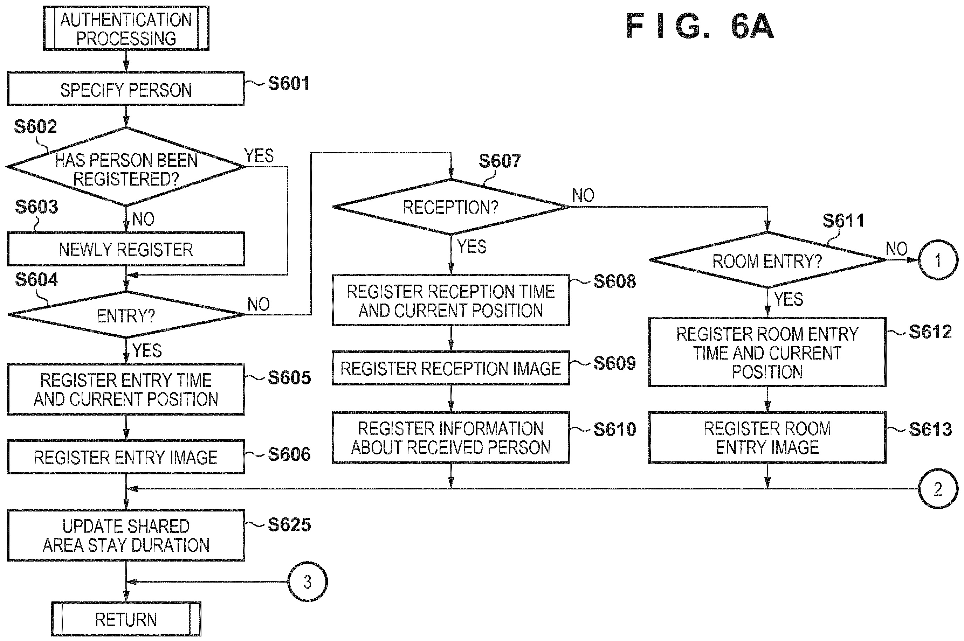

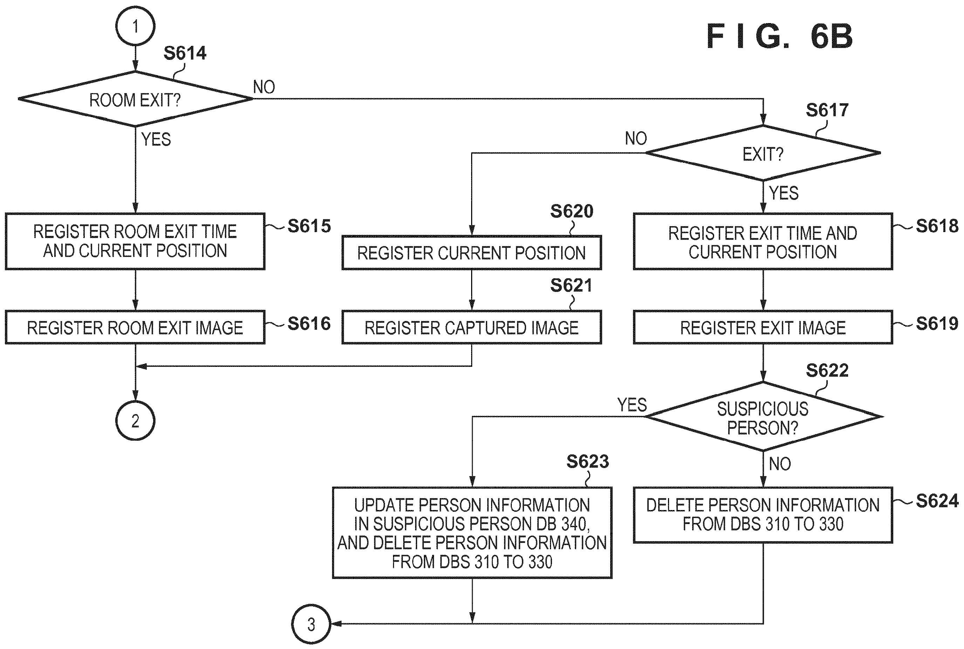

In step S501, the information processing apparatus 200 acquires the captured image and the detected person information 410 from the network camera 100. In step S502, the authentication unit 203 executes authentication processing. More specifically, the authentication unit 203 searches the database apparatus 300 based on the acquired detected person information 410, and performs processing of specifying a person while updating the registration information in each database. Details of the authentication processing in step S502 will be described later with reference to a flowchart shown in Figs. 6A and 6B.

The information processing apparatus 200 executes the processes in steps S501 and S502 for each of the captured image and the detected person information 410 acquired from the network camera 100 installed in the monitoring target zone. Processes in step S503 and subsequent steps are executed for a visitor who is recognized to currently stay in the shared area 1. The visitor staying in the shared area 1 is a visitor whose current position 328 indicates the shared area 1 in the time information database 320.

In step S503, the determination unit 205 acquires, from the database apparatus 300, information of the visitor corresponding to the person staying in the shared area 1. In step S504, based on the registration information acquired by the determination unit 205, it is determined whether the detected visitor has already been received. For example, this determination processing can be performed in accordance with whether the reception 314 in the visitor database 310 is "done". If it is determined that the visitor has not been received yet, the process advances to step S505; otherwise, the process advances to step S506.

In step S505, the determination unit 205 determines whether the stay duration in the shared area 1 is equal to or longer than a predetermined duration. This processing can be executed by, for example, determining whether the shared area stay duration 329 in the time information database 320 has a value equal to or longer than a predetermined duration. At this time, the predetermined duration can be represented by Th1. The magnitude of Th1 can be determined in consideration of a waiting time assumed to be received. If it is determined in step S505 that the predetermined duration has elapsed, the process advances to step S510; otherwise, the process advances to step S511.

In step S506, it is determined whether a room entry/exit has been recorded. For example, this determination processing can be performed by determining whether both the room entry 315 and the room exit 316 in the visitor database 310 are "done". If it is determined that a room entry/exit has been recorded, the process advances to step S507; otherwise, the process advances to step S508. In step S507, the determination unit 205 determines whether the stay duration in the shared area 1 is equal to or longer than a predetermined duration. This processing can be executed by, for example, determining whether the shared area stay duration 329 of the time information database 320 has a value equal to or longer than the predetermined duration. At this time, the predetermined duration can be represented by Th2. The magnitude of Th2 can be set to a time equal to or shorter than Th1 determined in consideration of the waiting time assumed to be received. If it is determined in step S507 that the predetermined duration has elapsed, the process advances to step S510; otherwise, the process advances to step S511.

In step S508, the determination unit 205 determines whether the available time assigned to the visitor has already started. For example, the determination processing can be performed based on information of the available time period 327 in the time information database 320. If the available time has already started, the process advances to step S509; otherwise, the process advances to step S511. In step S509, the determination unit 205 determines whether a time equal to or longer than a predetermined duration has elapsed since the start time of the available time. This processing can be executed by, for example, determining whether the difference between the current time and the start time of the available time is equal to or longer than the predetermined duration. At this time, the predetermined duration can be represented by Th3. A time equal to or shorter than Th1 or Th2 can be set as Th3. It is determined in step S509 that a time equal to or longer than the predetermined duration has elapsed, the process advances to step S510; otherwise, the process advances to step S511.

In step S510, the determination unit 205 controls the database management unit 204 to determine the corresponding visitor as a suspicious person, thereby registering, in the suspicious person flag of the visitor database 310, information indicating that the visitor is a suspicious person. At this time, the degree of suspiciousness may be registered in a plurality of stages in accordance with the length of the stay duration in the shared area 1 that is the basis of the determination. For example, by setting three stages of 30 min, 1 hr, and 2 hr, degree 1 of suspiciousness can be set when 30 min is exceeded, degree 2 of suspiciousness can be set when 1 hr is exceeded, and degree 3 of suspiciousness can be set when 2 hr is exceeded. However, this ranking is merely an example, and ranking according to an embodiment can be performed.

Information of the person is registered in the suspicious person database 340. More specifically, the name 342 and the ID number 343 of the person are acquired from the visitor database 310, and the date/time 344 and the shared area stay duration 345 are acquired from the time information database 320. The person specifying information 346 is acquired from the image database 330.

In step S511, the determination unit 205 determines whether the processes in steps S503 to S510 have been executed for all visitors staying in the shared area 1. If there is an unprocessed visitor, the process returns to step S503 to repeat the processes; otherwise, the process returns to step S501 to repeat the processes.

Note that when determining whether a visitor is a suspicious person, a degree of confidentiality assigned to the destination of the person in the predetermined area 2 may be taken into consideration. For example, since it can be said that a person permitted to enter an area with a high degree of confidentiality is highly reliable, it is possible to decrease the possibility that the person is determined as a suspicious person, by setting large values as the thresholds Th1 to Th3 each used to determine whether the predetermined duration has elapsed.

As described above, it is possible to specify a suspicious person by determining the degree of suspiciousness for each of all the visitors staying in the shared area 1.

The authentication processing in step S502 will be described next with reference to Figs. 6A and 6B. Figs. 6A and 6B are flowcharts illustrating an example of the authentication processing according to the embodiment of the invention.

In step S601, the authentication unit 203 extracts the person information 415 from the detected person information 410 received from the network camera 100, and specifies the detected person. More specifically, since the detected person information 410 includes the person information 415 of the detected person, a visitor with the person specifying information 332 whose feature most matches the person information 415 among the pieces of the person specifying information 332 registered in the image database 330 is specified. For example, if the person information 415 includes a face image, a visitor with the person specifying information 332 including a face image most similar to the face image is specified. Furthermore, if the person information 415 includes an image of the whole body of the person, an image of the upper body of the person, or the like, a visitor with the person specifying information 332 including an image most similar to the image is specified. Since the feature obtained from the image can include information of clothing, a bag, an ornament, and the like, the information can be used supplementarily. A method of processing of comparing images to specify a user is not the feature of the invention. An arbitrary known method can be adopted, and a detailed description thereof will be omitted.

In step S602, the authentication unit 203 determines whether the person can be specified, or whether the person has been registered in the image database 330. If, with the person specifying processing in step S601, the person cannot be specified in the image database 330, the process advances to step S603. On the other hand, if the person can be specified and it is determined that the person has been registered, the process advances to step S604. In step S603, since the visitor is a person who has not been registered in the image database 330, the authentication unit 203 assigns a new ID for identifying the visitor, and registers a new entry in each of the visitor database 310, the time information database 320, and the image database 330 via the database management unit 204. If it is determined in the person specifying processing in step S601 that the person has not been registered in the image database 330 but information matching the person information 415 of the detected person is registered in the person specifying information 346 of the suspicious person database 340, the person is a person of the first type specified as a suspicious person in the past. If the person is newly registered in the visitor database 310 in step S603, the value of the suspicious person flag 317 is set to a value indicating a suspicious person. At this time, the rank of the degree of suspiciousness can be determined in accordance with a past registration count. For example, if the number of times the person was recognized as a suspicious person is one, rank 1 can be set, if the number is two or three, rank 2 can be set, and if the number is four or more, rank 3 can be set.

For example, the person with an ID "1112" registered in the visitor database 310 shown in Fig. 3A has not been received but the suspicious person flag 317 has been set to 1. This is because this person is specified as the same person as the person with an ID "0003" registered in the suspicious person database 340 based on the authentication result of a captured image at the time of an entry.

In steps S601 to S603, all the persons included in the image captured by the network camera 100 are set as person specifying targets. However, a person of the second type for which it is unnecessary to perform person specifying processing, such as a staff working in the monitoring target zone, may be included in the captured image. A person of the second type is excluded from the person specifying target. To do this, person specifying information such as a face image for a person of the second type is prepared in advance, and compared to the information included in the person information 415. If the person is recognized as a person of the second type, the person is excluded from the application target of the invention.

In step S604, based on the camera ID 412 and/or the position information 413 of the detected person information 410, the authentication unit 203 determines whether the captured image is an image captured at the entrance/exit gate 3 of the shared area 1. If it is determined that the captured image is an image captured at the entrance/exit gate 3, the process advances to step S605; otherwise, the process advances to step S607. In step S605, the authentication unit 203 registers entry time in the entry time 322 of the time information database 320 via the database management unit 204 based on the time information included in the time information 414 of the detected person information 410. The authentication unit 203 also registers the current position 328 based on the position information 413 of the detected person information 410. In this case, since the visitor enters the monitoring target zone, the current position 328 indicates the shared area 1. In step S606, the authentication unit 203 registers, in the person specifying information 332 of the image database 330 via the database management unit 204, the feature amount included in the person information 415 of the detected person information 410, and registers, in the entry image 333 and the latest image 338 of the image database 330, the image included in the person information 415. After that, the process advances to step S625.

In step S607, based on the camera ID 412 and/or the position information 413 of the detected person information 410, the authentication unit 203 determines whether the captured image is an image captured at the reception 5 of the shared area 1. If it is determined that the captured image is an image captured at the reception 5, the process advances to step S608; otherwise, the process advances to step S611. In step S608, the authentication unit 203 registers reception time in the reception time 323 of the time information database 320 via the database management unit 204 based on the time information included in the time information 414 of the detected person information 410. At this time, the reception 314 of the visitor database 310 is updated from "not yet" to "done". In addition, the current position 328 is registered based on the position information 413 of the detected person information 410. In this case, since the visitor has been received in the shared area 1, the current position 328 indicates the shared area 1. In step S609, the authentication unit 203 registers, in the person specifying information 332 of the image database 330 via the database management unit 204, the feature amount included in the person information 415 of the detected person information 410, and registers, in the reception image 334 and the latest image 338 of the image database 330, the image included in the person information 415. As for the person specifying information 332, an old feature amount may be overwritten with a new feature amount, a new feature amount may be newly registered in addition to an old feature amount, or a result of combining old information and new information (for example, the weight of a new feature amount is increased by the simple average or weighted average) may be registered. The person specifying information 332 is processed in the same manner in subsequent processing.

In step S610, the database management unit 204 registers information about the visitor transmitted from the reception terminal 400 to the information processing apparatus 200. For example, if a notification of the name and the ID number is made, the pieces of information are registered in the name 312 and the ID number 313 of the visitor database 310. After that, the process advances to step S625.

In step S611, based on the camera ID 412 and/or the position information 413 of the detected person information 410, the authentication unit 203 determines whether the captured image is an image captured at the room entrance/exit 6 at the time of a room entry. If it is determined that the captured image is an image captured at the time of a room entry, the process advances to step S612; otherwise, the process advances to step S614. In step S612, the authentication unit 203 registers room entry time in the room entry time 324 of the time information database 320 via the database management unit 204 based on the time information included in the time information 414 of the detected person information 410. At this time, the room entry 315 of the visitor database 310 is updated from "not yet" to "done". Furthermore, the current position 328 is registered based on the position information 413 of the detected person information 410. In this case, since the visitor enters the predetermined area 2 from the room entrance/exit 6, the current position 328 indicates the predetermined area 2. In step S613, the authentication unit 203 registers, in the person specifying information 332 of the image database 330 via the database management unit 204, the feature amount included in the person information 415 of the detected person information 410, and registers, in the room entry image 335 and the latest image 338 of the image database 330, the image included in the person information 415. After that, the process advances to step S625.

In step S614, based on the camera ID 412 and/or the position information 413 of the detected person information 410, the authentication unit 203 determines whether the captured image is an image captured at the room entrance/exit 6 at the time of a room exit. If it is determined that the captured image is an image captured at the time of a room exit, the process advances to step S615; otherwise, the process advances to step S617. In step S615, the authentication unit 203 registers room exit time in the room exit time 325 of the time information database 320 via the database management unit 204 based on the time information included in the time information 414 of the detected person information 410. At this time, the room exit 316 of the visitor database 310 is updated from "not yet" to "done". In addition, the current position 328 is registered based on the position information 413 of the detected person information 410. In this case, since the visitor exits from the predetermined area 2 through the room entrance/exit 6, the current position 328 indicates the shared area 1. In step S616, the authentication unit 203 registers, in the person specifying information 332 of the image database 330 via the database management unit 204, the feature amount included in the person information 415 of the detected person information 410, and registers, in the room exit image 336 and the latest image 338 of the image database 330, the image included in the person information 415. After that, the process advances to step S625.

In step S617, based on the camera ID 412 and/or the position information 413 of the detected person information 410, the authentication unit 203 determines whether the captured image is an image captured at the entrance/exit gate 3 at the time of an exit. If it is determined that the captured image is an image captured at the time of an exit, the process advances to step S618; otherwise, the process advances to step S620. In step S618, the authentication unit 203 registers exit time in the exit time 326 of the time information database 320 via the database management unit 204 based on the time information included in the time information 414 of the detected person information 410. Furthermore, the authentication unit 203 registers the current position 328 based on the position information 413 of the detected person information 410. In this case, since the visitor exits outside the monitoring target zone, the current position 328 indicates the outdoors. In step S619, the authentication unit 203 registers, in the person specifying information 332 of the image database 330 via the database management unit 204, the feature amount included in the person information 415 of the detected person information 410, and registers, in the exit image 337 and the latest image 338 of the image database 330, the image included in the person information 415. After that, the process advances to step S622.

In step S620, the authentication unit 203 registers the current position in the current position 328 of the time information database 320 via the database management unit 204 based on the position information included in the position information 413 of the detected person information 410. In step S621, the authentication unit 203 registers, in the person specifying information 332 of the image database 330 via the database management unit 204, the feature amount included in the person information 415 of the detected person information 410, and registers, in the latest image 338 of the image database 330, the image included in the person information 415. After that, the process advances to step S625.

In step S622, when the exit image 337 is registered, the authentication unit 203 refers to the value of the suspicious person flag 317 of the visitor database 310, and determines whether the person has been recognized as a suspicious person. If it is determined that the person has been recognized as a suspicious person, the process advances to step S623; otherwise, the process advances to step S624. In step S623, the authentication unit 203 updates the person information of the person in the suspicious person database 340 via the database management unit 204. After the suspicious person database 340 is updated, the corresponding person information is deleted from each of the visitor database 310, the time information database 320, and the image database 330. In step S624, the authentication unit 203 deletes the information of the person determined not to be a suspicious person from each of the visitor database 310, the time information database 320, and the image database 330 via the database management unit 204. After that, the process returns to the processing shown in Fig. 5. Note that deletion of the registration information from each database is described in steps S623 and S624. However, the information may be held until a predetermined period elapses, and then deleted after the predetermined period elapses.

In step S625, the stay duration of the visitor whose current position 328 in the time information database 320 indicates "shared area 1" is calculated using expressions (1) to (3) below, and the shared area stay duration 329 is updated.

$$\text{time from entry to reception: current time - entry time} \qquad ...(1)$$

$$\text{time from reception to room entry: current time - start time of available time} \qquad ...(2)$$

$$\text{after room exit: current time - room exit time} \qquad ...(3)$$

The expression to be used can be determined based on the values of the reception 314, room entry 315, and room exit 316 in the visitor database 310. If the reception 314 is "not yet" (the room entry 315 and the room exit 316 are also "not yet"), expression (1) is selected. If the reception 314 is "done" and the room entry 315 and the room exit 316 are "not yet", expression (2) is selected. If all the reception 314, the room entry 315, and the room exit 316 are "done", expression (3) is selected. Note that if the room exit time cannot be specified in expression (3), the end time of the available time may be used.

Processing for displaying information about a suspicious person on the information display device 500 based on the above processing result will be described next. Fig. 7 is a flowchart illustrating an example of processing executed by the information processing apparatus 200 in the monitoring system 10 according to the embodiment of the invention.

In step S701, the notification unit 206 of the information processing apparatus 200 specifies a person whose suspicious person flag 317 has been set in the visitor database 310. Since the person can be specified based on the ID 311, the name 312, the ID number 313, and the like, the notification unit 206 acquires the pieces of information from the visitor database 310 via the database management unit 204. In step S702, the notification unit 206 acquires the person specifying information 332 of the suspicious person from the image database 330 via the database management unit 204 based on the information acquired in step S701. In this embodiment, since a common ID is used for the same person, the person specifying information 332 associated with the ID 331 that is the same as the ID 311 acquired from the visitor database 310 is acquired.

In step S703, the notification unit 206 searches for the suspicious person in the captured image received from the network camera 100 installed in the shared area 1. In this example, for example, it is possible to search for the person whose feature amount matches that included in the person specifying information 332 in each captured image. Since the detected person information 410 is transmitted from the network camera 100, the suspicious person may be specified by applying the person specifying information 332 acquired in step S702 with respect to the person information 415 included in the detected person information 410.

If the position of the suspicious person can be specified in the captured image, the notification unit 206 acquires, in step S704, the pieces of information about the person from the visitor database 310, the time information database 320, the image database 330, and the suspicious person database 340 via the database management unit 204. In step S705, the notification unit 206 transmits, as information that can be superimposed and displayed on the captured image of the shared area 1, to the information display device 500 together with the captured image, the information about the suspicious person acquired via the LAN I/F unit 201. The information display device 500 can display a screen by superimposing the information about the suspicious person on the image transmitted from the information processing apparatus 200.

Figs. 8A and 8B show examples of the display at this time. Figs. 8A and 8B are views each showing an example of the screen display on the information display device 500. Fig. 8A shows an example of a screen on which an image obtained by capturing the waiting area 4 in the shared area 1 is displayed. In a screen 800, an image obtained by shooting the waiting area 4 by the network camera 100 is displayed as an image 801. The network camera 100 that captures the waiting area 4 can capture the waiting area 4 from the ceiling side so as to observe it from above, and capture, from the front, visitors sitting on chairs in the waiting area 4. In the image 801, each mark 802 is a mark for identifying a person

**EP 3 487 151 A1**

determined as a suspicious person. At this time, two persons are recognized as suspicious persons.

In this display state, if a predetermined operation is performed with the operation unit of the information display device 500, the screen display is switched to a form shown in Fig. 8B. Referring to Fig. 8B, information about each person recognized as a suspicious person is displayed. The information can include, for example, the degree of suspiciousness of the person, information indicating whether a reception procedure has been done, a available time period, a total stay duration, an excess duration, and a past detection count. Among them, the excess duration can be obtained as, for example, the stay duration in the shared area 1, which is calculated by one of expressions (1) to (3) above, or the difference between the stay duration and the corresponding threshold. Furthermore, the past detection count can be determined based on the registration count of the same person in the suspicious person database 340. This past information may be displayed in more detail by clicking a portion on the screen 800 where the past detection count is displayed.

The above embodiment has described a case in which a person is specified based on an image captured by the network camera 100. However, a person need not be specified based on only an image. For example, a beacon transmitter may be lent at the time of reception at the reception 5, and a beacon signal transmitted by the beacon transmitter may be received, thereby detecting and specifying the existence of the person.

According to the above embodiment, it is possible to reliably detect and monitor a person who unnecessarily stays, for a long time, in the shared area 1 where arbitrary persons can stay. Especially in this embodiment, it is possible to detect and monitor a person who stays in the shared area 1 for a long time during a period from an entry to the monitoring target zone to reception, during a period from reception to a room entry, or after a room exit. This can provide a mechanism for appropriately monitoring a person by actually observing persons and visitors in a shared area in a facility while ostensibly simulating business.

<Other Embodiments>

Although the embodiment has been described in detail above, the invention can take an embodiment as a system, an apparatus, a method, a program, a recording medium (storage medium), or the like. More specifically, the invention may be applied to a system constituted by a plurality of devices (for example, a host computer, an interface device, an image capturing apparatus, and a Web application), or an apparatus formed from one device.

Embodiment(s) of the invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

An information processing apparatus comprising, a calculation means configured to calculate, for each of persons who stay in a first area included in a processing target image obtained by capturing the first area, a stay duration in which the person stays in the first area, a specifying means configured to specify, among the staying persons, a first person whose stay duration exceeds a predetermined duration, and an output means configured to output a notification about the first person specified by the specifying means, wherein the calculation means calculates, as the stay duration, a first stay duration after each person exits, to the first area, from a second area different from the first area.

**Claims**

1. An information processing apparatus (200) comprising:

calculation means (203) configured to calculate, for each of persons who stay in a first area included in a processing target image obtained by capturing the first area, a stay duration in which the person stays in the first area;

specifying means (205) configured to specify, among the staying persons, a first person whose stay duration exceeds a predetermined duration; and

output means (206) configured to output a notification about the first person specified by the specifying means,

wherein the calculation means calculates, as the stay duration, a first stay duration after each person exits, to the first area, from a second area different from the first area.

2. The apparatus according to claim 1, wherein the calculation means calculates the first stay duration based on a difference between current time and time at which each person exits from the second area to the first area.

3. The apparatus according to claim 2, wherein if the time at which each person exits from the second area to the first area cannot be specified, the calculation means calculates the first stay duration based on a difference between the current time and end time of a time slot in which the person is permitted to stay in the second area.

4. The apparatus according to claim 2 or 3, wherein the time at which each person exits is based on one of
capturing time of an image captured when the person exits from the second area to the first area, and
time at which the person passes through a side gate from the second area to the first area.

5. The apparatus according to any one of claims 1 to 4, wherein the calculation means further calculates, as the stay duration, a second stay duration in which each person stays in the first area during a time period from when the person completes, in the first area, a procedure for entering the second area until the person enters the second area.

6. The apparatus according to claim 5, wherein the calculation means calculates the second stay duration as a time in which the person stays in the first area even after the procedure is completed and current time exceeds time at which the person is permitted to enter the second area.

7. The apparatus according to any one of claims 1 to 6, wherein the calculation means further calculates, as the stay duration, a third stay duration in which each person stays in the first area before a procedure for entering the second area is performed in the first area.

8. The apparatus according to any one of claims 1 to 7, wherein
the specifying means ranks the person specified as the first person in accordance with a length of the stay duration, and
the output means includes information about the rank in the notification.

9. The apparatus according to any one of claims 1 to 8, wherein if the processing target image includes a person of a first type registered in advance, the specifying means specifies the person of the first type as the first person.

10. The apparatus according to claim 9, wherein the person of the first type is a person who has been specified as the first person in the past.

11. The apparatus according to any one of claims 1 to 10, wherein if the processing target image includes a person of a second type registered in advance, the calculation means excludes the person of the second type from a target whose stay duration is calculated.

12. The apparatus according to any one of claims 1 to 11, wherein if the same person as the person specified as the first person by the specifying means has been specified as the first person in the past, the notification includes information about the past specification.

13. The apparatus according to any one of claims 1 to 12, wherein the output means outputs the notification as information that can be superimposed and displayed on an image obtained by capturing the first area.

14. The apparatus according to any one of claims 1 to 13, wherein
the first area is an area where an arbitrary person can stay, and
the second area is an area where only a permitted person can enter.

**15.** A monitoring system comprising:

an image capturing apparatus (100) configured to generate an image by capturing a predetermined space including a first area and generate a processing target image by extracting a region of a person included in the image;
an information processing apparatus (200) including
calculation means (203) configured to calculate, for each of persons who stay in a first area included in the processing target image obtained by capturing the first area, a stay duration in which the person stays in the first area,
specifying means (205) configured to specify, among the staying persons, a first person whose stay duration exceeds a predetermined duration, and
output means (206) configured to output a notification about the first person specified by the specifying means, wherein the calculation means calculates, as the stay duration, a first stay duration after each person exits, to the first area, from a second area different from the first area; and
a display device (500) configured to receive and display the notification output by the output means of the information processing apparatus.

**16.** A control method for an information processing apparatus, comprising:

calculating (S502, S625), for each of persons who stay in a first area included in a processing target image obtained by capturing the first area, a stay duration in which the person stays in the first area;
causing a specifying means to specify (S505, S507, S509, S510), among the staying persons, a first person whose stay duration exceeds a predetermined duration; and
causing an output means to output (S705) a notification about the first person specified in the causing the specifying means,

wherein in the calculating, a first stay duration after each person exits, to the first area, from a second area different from the first area is calculated as the stay duration.

**17.** A non-transitory computer-readable storage medium storing a program that, when executed by a processor of an information processing apparatus, causes a processor to perform:

calculating (S502, S625), for each of persons who stay in a first area included in a processing target image obtained by capturing the first area, a stay duration in which the person stays in the first area;
causing a specifying means to specify (S505, S507, S509, S510), among the staying persons, a first person whose stay duration exceeds a predetermined duration; and
causing an output means to output (S705) a notification about the first person specified in the causing the specifying means,

wherein in the calculating, a first stay duration after each person exits, to the first area, from a second area different from the first area is calculated as the stay duration.

# F I G. 1

EP 3 487 151 A1

**F I G. 2A**

# F I G. 2B

# F I G. 3A

EP 3 487 151 A1

| ID | NAME | ID NUMBER | RECEPTION | ROOM ENTRY | ROOM EXIT | SUSPICIOUS PERSON FLAG |
|---|---|---|---|---|---|---|
| 311 | 312 | 313 | 314 | 315 | 316 | 317 |
| 1113 | — | — | NOT YET | NOT YET | NOT YET | 0 |
| 1112 | — | — | NOT YET | NOT YET | NOT YET | 1 |
| 1111 | ICHIRO TANAKA | AB1234567 | DONE | NOT YET | NOT YET | 1 |
| 1110 | JIRO SATO | CD2345678 | DONE | DONE | NOT YET | 0 |
| 1109 | SABURO TAKAHASHI | EF3456789 | DONE | DONE | DONE | 3 |
| . | . | . | . | . | . | . |
| . | . | . | . | . | . | . |

310

# F I G. 3B

| ID | ENTRY TIME | RECEPTION TIME | ROOM ENTRY TIME | ROOM EXIT TIME | EXIT TIME | AVAILABLE TIME PERIOD | CURRENT POSITION | SHARED AREA STAY DURATION |
|---|---|---|---|---|---|---|---|---|
| 321 | 322 | 323 | 324 | 325 | 326 | 327 | 328 | 329 |
| 1113 | 14:00 | — | — | — | — | — | SHARED AREA 1 | 0:05 |
| 1112 | 13:55 | — | — | — | — | — | SHARED AREA 1 | 0:10 |
| 1111 | 13:23 | 13:25 | — | — | — | 13:30-15:00 | SHARED AREA 1 | 0:40 |
| 1110 | 11:20 | 11:25 | 11:30 | — | — | 11:30-14:00 | PREDETERMINED AREA 2 | 0:00 |
| 1109 | 9:30 | 9:45 | 9:55 | 11:55 | — | 10:00-12:00 | SHARED AREA 1 | 2:10 |
| . | . | . | . | . | . | . | . | . |
| . | . | . | . | . | . | . | . | . |

320

# FIG. 3C

331  332  333  334  335  336  337  338  330

| ID | PERSON SPECIFYING INFORMATION | ENTRY IMAGE | RECEPTION IMAGE | ROOM ENTRY IMAGE | ROOM EXIT IMAGE | EXIT IMAGE | LATEST IMAGE |
|---|---|---|---|---|---|---|---|
| 1113 | ... | E1113.jpg | – | – | – | – | S1113.jpg |
| 1112 | ... | E1112.jpg | – | – | – | – | S1112.jpg |
| 1111 | ... | E1111.jpg | R1111.jpg | – | – | – | S1111.jpg |
| 1110 | ... | E1110.jpg | R1110.jpg | IN1110.jpg | – | – | S1110.jpg |
| 1109 | ... | E1109.jpg | R1109.jpg | IN1109.jpg | OUT1109.jpg | – | S1109.jpg |
| . | . | . | . | . | . | . | . |
| . | . | . | . | . | . | . | . |

# FIG. 3D

341  342  343  344  345  346  340

| ID | NAME | ID NUMBER | DATE/TIME | SHARED AREA STAY DURATION | PERSON SPECIFYING INFORMATION |
|---|---|---|---|---|---|
| 0001 | ICHIRO TANAKA | AB1234567 | 2017/10/10 | 2.5 | ... |
| 0002 | SABURO TAKAHASHI | EF3456789 | 2017/10/5 | 3 | ... |
| 0003 | – | – | 2017/10/3 | 2 | ... |
| . | . | . | . | . | . |

EP 3 487 151 A1

# F I G. 4A

```
            ( START )
                │
                ▼ ◄──────────────────┐
┌─────────────────────────────────────┐  │
│    CAPTURE CAPTURING TARGET REGION,  │  │
S401│ AND TRANSMIT CAPTURED IMAGE TO INFORMATION │  │
│       PROCESSING APPARATUS 200       │  │
└─────────────────────────────────────┘  │
                │                          │
                ▼                          │
S402                                       │
         < IS PERSON DETECTED? >──NO──────►│
                │                          │
               YES                         │
                ▼                          │
┌─────────────────────────────────────┐  │
│   TRANSMIT DETECTED PERSON INFORMATION │  │
S403│ TO INFORMATION PROCESSING APPARATUS 200 │  │
└─────────────────────────────────────┘  │
                │                          │
                └──────────────────────────┘
```

# F I G. 4B

410

| 411 | 412 | 413 | 414 | 415 |
|---|---|---|---|---|
| ID | CAMERA ID | POSITION INFOR-MATION | TIME INFOR-MATION | PERSON INFORMATION (IMAGE, FEATURE AMOUNT, COORDINATE INFORMATION) |

# FIG. 5

```
                                    ( START )
                                        │
                                        ▼
        ┌─────────────────────────────────────────────┐
   S501 │ RECEIVE CAPTURED IMAGE AND                    │
        │ DETECTED PERSON INFORMATION                   │
        │ FROM NETWORK CAMERA 100                       │
        └─────────────────────────────────────────────┘
                                        │
                                        ▼
        ┌─────────────────────────────────────────────┐
   S502 │ SEARCH/UPDATE PROCESSING                      │
        │ OF DATABASE APPARATUS 300                     │
        └─────────────────────────────────────────────┘
                                        │
                                        ▼
        ┌─────────────────────────────────────────────┐
        │ ACQUIRE, FROM                                 │
   S503 │ DATABASE APPARATUS 300,                       │
        │ REGISTRATION INFORMATION ABOUT                │
        │ VISITOR STAYING IN SHARED AREA 1              │
        └─────────────────────────────────────────────┘
                                        │
                                        ▼
                                                    S504
            NO        ◇ HAS VISITOR BEEN RECEIVED? ◇
        ◄─────────────                                   
                                    │ YES
                                    ▼               S506
   S505                      ◇ HAS ROOM ENTRY/EXIT BEEN RECORDED? ◇
     ◇ HAS PREDETERMINED           │ YES ──────────────┐
  YES  DURATION ELAPSED ◇          │ NO                │
  ◄──  ?                           ▼                    ▼
       │ NO                                  ◇ HAS AVAILABLE TIME  NO
       │              S507                     STARTED? ◇ ─────►
       │         ◇ HAS PREDETERMINED               │ YES
       │    NO    DURATION ELAPSED ◇               ▼             S509
       │  ◄────    ?                    ◇ HAS PREDETERMINED       NO
       │              │ YES              DURATION ELAPSED SINCE ─►
       │              │                  START TIME? ◇
       │              │                       │ YES
       │              └──────────────────────►│
       │                                       ▼
       │                   ┌─────────────────────────────────────┐
       │                   │ SET SUSPICIOUS PERSON FLAG 317,       │
       │              S510 │ AND REGISTER PERSON INFORMATION       │
       │                   │ IN SUSPICIOUS PERSON DB 340           │
       │                   └─────────────────────────────────────┘
       │                                       │
       │                                       ▼                  S511
       │              NO      ◇ HAVE ALL VISITORS STAYING
       └──────────────────────  IN SHARED AREA 1 BEEN
                                SELECTED? ◇
                                        │ YES
```

# F I G. 6A

AUTHENTICATION PROCESSING

SPECIFY PERSON — S601

S602
HAS PERSON BEEN REGISTERED? — YES

S603 ↓NO
NEWLY REGISTER

S604
ENTRY? — NO

↓YES

REGISTER ENTRY TIME AND CURRENT POSITION — S605

REGISTER ENTRY IMAGE — S606

UPDATE SHARED AREA STAY DURATION — S625

③

RETURN

S607
RECEPTION? — NO

↓YES

REGISTER RECEPTION TIME AND CURRENT POSITION — S608

REGISTER RECEPTION IMAGE — S609

REGISTER INFORMATION ABOUT RECEIVED PERSON — S610

S611
ROOM ENTRY? — NO ①

↓YES

REGISTER ROOM ENTRY TIME AND CURRENT POSITION — S612

REGISTER ROOM ENTRY IMAGE — S613

②

EP 3 487 151 A1

**F I G. 6B**

① → S614

**ROOM EXIT?** — NO → S617 **EXIT?**

ROOM EXIT? — YES

EXIT? — NO

EXIT? — YES

**S615** REGISTER ROOM EXIT TIME AND CURRENT POSITION

**S620** REGISTER CURRENT POSITION

**S618** REGISTER EXIT TIME AND CURRENT POSITION

**S616** REGISTER ROOM EXIT IMAGE

**S621** REGISTER CAPTURED IMAGE

**S619** REGISTER EXIT IMAGE

②

**S622** SUSPICIOUS PERSON?

SUSPICIOUS PERSON? — YES

SUSPICIOUS PERSON? — NO

**S623** UPDATE PERSON INFORMATION IN SUSPICIOUS PERSON DB 340, AND DELETE PERSON INFORMATION FROM DBS 310 TO 330

**S624** DELETE PERSON INFORMATION FROM DBS 310 TO 330

③

# F I G. 7

```
                    ┌─────────────┐
                    │    START    │
                    └─────────────┘
                           │
                           ▼
       ┌──────────────────────────────────┐
       │     SPECIFY PERSON WHOSE          │
       │  SUSPICIOUS PERSON FLAG 317       │── S701
       │        HAS BEEN SET               │
       └──────────────────────────────────┘
                           │
                           ▼
       ┌──────────────────────────────────┐
       │        ACQUIRE PERSON             │
       │    SPECIFYING INFORMATION 332     │── S702
       └──────────────────────────────────┘
                           │
                           ▼
       ┌──────────────────────────────────┐
       │  SEARCH FOR SUSPICIOUS PERSON IN  │
       │  CAPTURED IMAGE OF SHARED AREA 1  │── S703
       └──────────────────────────────────┘
                           │
                           ▼
       ┌──────────────────────────────────┐
       │     ACQUIRE PERSON INFORMATION    │── S704
       └──────────────────────────────────┘
                           │
                           ▼
       ┌──────────────────────────────────┐
       │ SUPERIMPOSE AND DISPLAY INFORMATION│
       │    INDICATING SUSPICIOUS PERSON   │
       │ ON CAPTURED IMAGE OF SHARED AREA 1,│── S705
       │   AND TRANSMIT INFORMATION TO     │
       │  INFORMATION DISPLAY DEVICE 500   │
       └──────────────────────────────────┘
                           │
                           ▼
                    ┌─────────────┐
                    │     END     │
                    └─────────────┘
```

# FIG. 8A

CURRENT TIME : 14:05

802
801
802
800

# FIG. 8B

CURRENT TIME : 14:05

802

DEGREE OF SUSPICIOUSNESS ★★★
RECEPTION STATE: RECEIVED
AVAILABLE TIME PERIOD: 10:00 - 12:00
TOTAL STAY DURATION: 4.5 hr
EXCESS DURATION: 2 hr
PAST DETECTION COUNT: 3

800
803

802

DEGREE OF SUSPICIOUSNESS ★★
RECEPTION STATE: RECEIVED
AVAILABLE TIME PERIOD: 11:00 - 13:00
TOTAL STAY DURATION 4 hr
EXCESS DURATION: 1 hr
PAST DETECTION COUNT: 1

804

Europäisches
Patentamt

European
Patent Office

Office européen
des brevets

# EUROPEAN SEARCH REPORT

Application Number

EP 18 20 5337

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | JP 2006 099486 A (TOSHIBA CORP) 13 April 2006 (2006-04-13) * abstract * * paragraph [0001] * * paragraph [0007] - paragraph [0038] * * paragraph [0043] * * paragraph [0053] - paragraph [0057] * ----- | 1-17 | INV. H04L29/08 G08B13/196 H04N5/225 |
| X  A | US 2015/117835 A1 (YABUUCHI SHU [JP]) 30 April 2015 (2015-04-30) * abstract * * paragraph [0010] - paragraph [0012] * * paragraph [0031] - paragraph [0039] * * paragraph [0047] * * paragraph [0053] * ----- | 1-4,8, 13-17 5-7,9-12 |  |
| A | JP 2006 163788 A (HITACHI COMM TECH LTD) 22 June 2006 (2006-06-22) * abstract * * paragraph [0001] * * paragraph [0007] - paragraph [0018] * * paragraph [0034] - paragraph [0044] * ----- | 1-17 | TECHNICAL FIELDS SEARCHED (IPC) H04L G08B H04N |

The present search report has been drawn up for all claims

| Place of search | Date of completion of the search | Examiner |
|---|---|---|
| The Hague | 18 March 2019 | Stevanovic, Natasa |

EPO FORM 1503 03.82 (P04C01)

## ANNEX TO THE EUROPEAN SEARCH REPORT
## ON EUROPEAN PATENT APPLICATION NO.

EP 18 20 5337

This annex lists the patent family members relating to the patent documents cited in the above-mentioned European search report.
The members are as contained in the European Patent Office EDP file on
The European Patent Office is in no way liable for these particulars which are merely given for the purpose of information.

18-03-2019

| Patent document cited in search report | | Publication date | Patent family member(s) | | Publication date |
|---|---|---|---|---|---|
| JP 2006099486 | A | 13-04-2006 | NONE | | |
| US 2015117835 | A1 | 30-04-2015 | JP | 6364743 B2 | 01-08-2018 |
| | | | JP | 2015089019 A | 07-05-2015 |
| | | | US | 2015117835 A1 | 30-04-2015 |
| JP 2006163788 | A | 22-06-2006 | NONE | | |

EPO FORM P0459

For more details about this annex : see Official Journal of the European Patent Office, No. 12/82

**EP 3 487 151 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2006099486 A

- JP 2015232791 A